# EUROPEAN PATENT APPLICATION

(11) **EP 3 791 721 A1**
(43) Date of publication of application: **17.03.2021**
(21) Application number: 19197367.6
(22) Date of filing: 13.09.2019
(51) Int. Cl.: A01N 25/34, A01N 25/00

(54) **ENERGY CONTROL**

(71) Applicant: Yonder AS, 0212 Oslo (NO)
(72) Inventor: VELSVIK, Sjur Andreas, 0212 Oslo (NO)
(74) Representative: Acapo AS

(57) **Abstract**

A system and method for energy control in general and more specifically a system and a method for controlling a threshold energy level for a chemical reaction is provided.

This is performed using a pad having an impression of an energy.

## Description

### Background of the Invention

### Field of the Invention

The invention relates to energy control in general and more specifically a system and a method for controlling a threshold energy level for a chemical reaction.

### Background Art

State of the art is reflected in temperature control. Many physical and chemical reactions are significantly slowed down by lowering the temperature, to the point of effectively stopping at a low temperature. Conversely many reaction rates increase at higher temperatures.

A problem with use of temperature control is that freezing can cause damage such as by crystals forming and heating can cause damage, especially to complex organic compounds.

From prior art one should refer to ...

There is therefore a need for a method and a system to overcome the above mentioned problems.

### Summary of the Invention

### Problems to be Solved by the Invention

Therefore, a main objective of the present invention is to provide a system and method to control the threshold energy of chemical reactions.

### Means for Solving the Problems

The objective is achieved according to the invention by a method to energize a first object by exposure for use in energy control as defined in the preamble of claim 1, having the features of the characterising portion of claim 1, an energized object, called a pad, as defined in the preamble of claim 10, having the features of the characterising portion of claim 10, and use of an energized object, called a pad, for preserving white fish, as defined in the preamble of claim 11, having the features of the characterising portion of claim 11.

A number of non-exhaustive embodiments, variants or alternatives of the invention are defined by the dependent claims.

The present invention attains the above-described objective by a method for acquiring energy, a method to transfer energy to an object or a pad, and the use of said pad to control a threshold energy of an article in proximity to said pad.

For convenience, an activated object according to the methods disclosed here is called a pad. In practice the pad can take of the appearance of a piece of cardboard but other forms are envisaged.

In this disclosure white fish means lean fish that stores fat in the liver such as cod, in contrast to fatty fish such as salmon and mackerel.

### Effects of the Invention

The present invention comprises a technological advantage over known systems and methods by use of direct effect on the threshold energy using an exposed pad.

The present invention provides several further advantageous effects:
- it is not necessary to expose the system to very low temperatures
- the pad can be placed in proximity but not necessarily direct contact, easing handling of products or systems to be controlled
- it makes it possible to control the threshold energy easily

### Brief Description of the Drawings

The above and further features of the invention are set forth with particularity in the appended claims and together with advantages thereof will become clearer from consideration of the following detailed description of exemplary embodiments of the invention given with reference to the accompanying drawings.

The invention will be further described below in connection with exemplary embodiments which are schematically shown in the drawings, wherein:
Fig. 1 shows schematically a chemical process,
Fig. 2 shows an energy capture process in a simplest form,
Fig. 3 shows a system for duplicating pads.

### Description of the Reference Signs

The following reference numbers and signs refer to the drawings:

| | |
|---|---|
| 100 | A chemical energy system |
| 102 | Initial position |
| 104 | Added energy to reach activation energy |
| 106 | Activated position |
| 108 | New stable position |
| 112 | Released energy |
| 200 | Energy capture system |
| 202 | Incident radiation |
| 204 | Working medium, fluid |
| 206 | A first pad for reception, energised object |
| 208 | A second pad for emission |
| 212 | A container for the working medium |
| 220 | Energy projection system |
| 222 | Emission pad for emission into projection |
| 224 | Projector |
| 226 | Reception pad for reception of projection |

### Detailed Description of the Invention

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The invention will be further described in connection with exemplary embodiments which are schematically shown in the drawings.

### Principles forming the basis of the invention

The inventor has realised that inhibiting chemical processes is an alternative to cooling for preventing degradation of food due to unwanted biochemical processes.

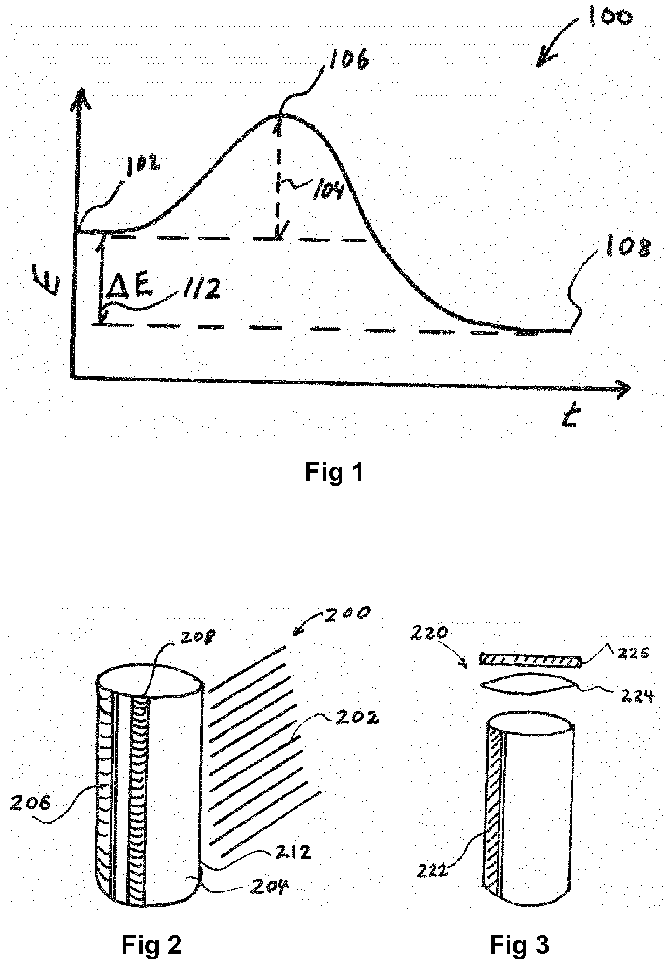

Fig. 1 shows schematically a chemical process. Unless energy is added, a chemical process will typically go in a direction that reduces Gibbs' free energy. However, a semi stable initial position implies that a threshold must be overcome in order to proceed, otherwise the initial position would never have been stable. The system 100 starts in a semi stable state 102, takes in an amount of energy 104 to overcome the chemical activation energy and is raised to activated state 106. Shortly thereafter the system falls to a new stable state 108, releasing energy 112 corresponding to the energy difference between the activated position 106 and new stable position 108.

The inventor has realised that preventing the system from attaining the activated position 106 will stop the biochemical processes that cause food degradation. In the following the term biotope means a place comprising living beings, in particular foodstuff with virus, living bacteria, fungus etc.

Fig. 2 shows the process in an energy capture system 200 in a simplest form, wherein a working medium 204 is exposed to an incident radiation 202, typically electromagnetic energy, preferably optical energy. The resulting exposure is then transferred to a pad 206 for reception by placing the pad in proximity to a container 212 holding the working fluid such as water, wherein the pad is 206 preferably in contact with the container. One can also immerse the pad in water if the pad is water proof. The pad starts out in a fluid form and when it is solidified or hardened the pad retains the impression from the exposure. This is essentially a phase transition liquid to solid or gaseous to solid. The solidified pad retains the energy and an impression of the energy. In this disclosure a pad is any object that can be exposed and retain an impression of an exposure from another pad or energy.

The pad 206 can additionally be exposed to a second pad 208 for emission which has previously been exposed, which in Fig. 2 is shown as being attached to the container. In this embodiment the second pad activates the working fluid which then activates the first pad 206.

On exposure the working medium is energized. This energy has been found to dissipate over time, but experiments show that leaving the exposed pad 206 in place will maintain the energy level of the working medium for a longer period than without the pad in place. It has also been found that the working medium can be energised by an already energised pad, as an alternative to the incident radiation disclosed above.

Fig. 3 shows a system for duplicating pads, using exposure through the working medium. This system further comprises an energy projection system 220. In this projection system the projection system comprises an emission pad 222 for emission into the projection on one side of the working fluid, a reception pad 226 for reception of projection positioned on the opposite side of the emission pad from the working fluid, and a projector 224 positioned between the working medium 204 and the reception pad 226. The process does not duplicate the energy itself but the impression of the originally exposed energy.

In operations the energy from the working medium 212 is focused onto the reception pad. The projector works like an optical projector.

Alternatively if the working medium is already energised it is not necessary to use an emission pad 222 but instead rely on the working medium alone for projection onto a reception pad.

The energy transfer can take on many routes and combinations. For this reason the inventor has developed the following nomenclature.

The first letter indicates the initial direct exposure

Subsequent letters are indirect exposures from the previous medium
- O:: Optical exposure
- H:: Hardening or solidification during exposure
- F:: Using fluid

Thus OFH would indicate optical exposure to fluid which is then transferred by hardening, typically a pad.

### Optical Exposure

In this context optical exposure comprises both exposure to an incoming energy source as well as exposure to an already energised medium. This medium can be a fluid.

### Hardening or Solidification During Exposure

In this context hardening means phase transition of an object into solid form while being exposed to an incoming energy source or exposed to an already energised medium. This object can start as a liquid or a gas, while the process renders the object into a solid state.

### Fluid

In this case a fluid is exposed to an incoming energy source or exposed to an already energised medium. This energised medium can be a fluid. The exposed fluid retains the energised properties but tends to dissipate its qualities over time.

### Examples

Experiments have been made by curing epoxy in the presence of sunlight. The curing process has been found to be a practical form of phase transition, sufficient to achieve the preservation of the effect. In the nomenclature above, this is an OH process. In the tests done, the cured epoxy were shaped as short cylinders, demonstrating that the effect of the pad is present in several geometrical shapes.

In other experiments a liquid polymer was attached to a container filled with water and exposed to sunlight during hardening. Also this process was in effect a phase transition process that preserved the effect in the hardened polymer. In the nomenclature above, this is an OFH process.

In both cases the epoxy and the hardened polymer are pads.

### Food Degradation

Preservation of food is an application of the technology disclosed here. Food degradation has several causes. Some are biological such as attack caused by bacteria and fungi, including yeast and mould. Others are based on enzymes, oxidation and other chemical reactions. In seafood protease of free amino acid is a common form of food degradation.

All of these processes are chemical or biochemical processes. Tests show that pads prepared according to the methods above will increase the shelf life of white fish when a pad is brought into proximity to the fish. Normal shelf life of white fish when kept at 4 C is about one week, and if kept at close to 0 C shelf life is up to 2 weeks. After this degradation has gone too far for human consumption, and the fish can take on a smell or appearance that consumers will not accept.

### Best Modes of Carrying Out the Invention

The embodiment of the apparatus according to the invention shown in Figs. 2 and 3 comprises water as the working medium, and is placed in a transparent plastic container. The transparency makes alignment for the projection easier to adjust. The process is thus optical exposure (O) to a fluid (F), in proximity to a pad that undergoes hardening (H). In the nomenclature above this is an OFH process, and provides an energized pad as an intermediate result.

Next the pad is used as a master for processing subsequent mass production by optical exposure (O) to pads being printed, the fixation of the print being effectively a form of hardening (H). In the nomenclature the mass produced pads thus become a result of an OFHOH process.

It has been found that a pad that has been impressed by the originally exposed energy, either exposure, transfer or projection, will increase the activation energies of the processes in white fish that are related to food degradation. It has also been found, qualitatively and quantitatively, that the pad does not have to be in direct contact with the food to have this desired effect. This means the pad can be placed under a tray for food and wrapped in shrink wrap, thus simplifying the process. Tests show that the effective range of a pad will extend to at least the entire product for typical food containers used for white fish in serving packaged used when selling to end users.

In a variation parts of the packaging itself can be a pad such as the tray or the shrink wrap, by exposing these to a master pad during solidification.

Tests show that shelf life of white fish can be extended from the normally expected 2 weeks to 3 weeks when the fish is still determined by independent laboratories to be of prime quality.

### Testing

The effect of the invention can be tested and show reproducibility using the following method.

The fish selected for the test is cod. The cod is headed and gutted on board the fishing vessel, and pre frozen. When it arrives in the test facility, it is subject to thawing/defrosting, processing and portion packing as fresh fish.

The packing material for the test pack consists of a plastic bowl including transparent plastic glued on top. The weight of the fish portion in each pack is approximately 300 gram. Each pack is preferably labelled on the top of the pack, showing the test name and the day it should be tested. The fish is stored in a refrigerated storage room holding a temperature between 3 and 4 Celsius.

The study is carried out over a period of 3 weeks and samples are withdrawn from the packages as follows: Day 1, 10, 14, 16 and day 21.

Two packs (1 and 2) are tested each test day. The average value constitutes the trend value.

The following reference/limit values with regard to maximum bacteria colony forming units ("cfu") are used as benchmarks under the testing:

| | |
|---|---|
| • Fresh food, general: | Max total 5 000 000 cfu/g - Log cfu/g 6,70 |
| • Fresh food, prime: | Max total 1 200 000 cfu/g - Log cfu/g 6,08 |

After 21 days the result should show below 5 000 000 cfu/g. In some tests the result is even below 1 200 000 cfu/g.

### Alternative Embodiments

A number of variations on the above can be envisaged. For instance, the working medium can be of different kinds such as but not limited to water, alcohol, acids etc.

Experiments show that the working medium can be in liquid, solid or gaseous forms. Some examples of these are liquids such as acetic acid, solids such as water ice, and gases such as water vapour.

Also polar and non-polar media can work though the efficiencies of the resulting pads will differ. Examples of these are polar matter such as water and acetic acid, and non-polar media such as epoxy and hydrocarbons found in petrol and diesel, and gases such as butane and propane.

As an alternative to duplicating pads using exposure through the working medium, it is possible to project without a working medium. This system still comprises an energy projection system 220. In this projection system the projection system comprises an emission pad 222 for emission into the projection, a reception pad 226 for reception of projection positioned facing the emission pad, and a projector 224 positioned between the emission pad 224 and the reception pad 226.

A direct transfer method by projecting from the working fluid to a reception pad without the use of an emission pad is possible if the working fluid is already energised and is maintained in this state. Preferably the working fluid is maintained in the energised state by continuous irradiation.

### Industrial Applicability

The invention according to the application finds use in preservation of white fish. The effect has been documented by an independent laboratory.

## Claims

1. A method to energize a first object (206) by exposure for use in energy control, comprising:
positioning the first object in a position for exposure, and
exposing the first object to an incident radiation (202).

2. The method according to claim 1, wherein the first object is energized by optical exposure (O) wherein the incident radiation is incoming electromagnetic radiation (O).

3. The method according to claim 1, wherein the incident radiation is exposure from a second object that has already been energized.

4. The method according to one of claims 1 - 3, wherein the first object is hardened (H) by transferring to a solid state before removing the first object from exposure.

5. The method according to claim 3, wherein the second object is a hardened object energized according to the method of claim 4.

6. The method according to one of claims 1 - 3, wherein the first object is a fluid (204) (F).

7. The method according to claim 3, wherein the second object is a fluid (204) energized according to the method of claim 6.

8. The method according to claim 2,
wherein the first object is a fluid (204),
a second object is a hardened object energized according to the method of claim 4, and
the second object is kept in proximity to the fluid in order to stabilise said fluid.

9. The method according to claim 8, wherein the second object undergoes hardening according to the method of claim 4 while being kept in proximity to the fluid (204).

10. An energized object (206, 208, 212, 214) made using any of the preceding claims.

11. Use of a pad (206, 208, 212, 214) from an energised object according to claim 10, for preserving white fish, by controlling a threshold energy.
